(19) Europäisches Patentamt
European Patent Office
Office européen des brevets

(11) **EP 1 816 700 A1**

(12) **EUROPÄISCHE PATENTANMELDUNG**

(43) Veröffentlichungstag:
**08.08.2007 Patentblatt 2007/32**

(51) Int Cl.:
**H01M 10/44** *(2006.01)*       **H01M 10/48** *(2006.01)*

(21) Anmeldenummer: **07100970.8**

(22) Anmeldetag: **23.01.2007**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **02.02.2006 DE 102006004786**

(71) Anmelder: **Hella KGaA Hueck & Co.**
**59552 Lippstadt (DE)**

(72) Erfinder: **Rosenmayr, Dr. Marc**
**Plymouth, MI, 48170 (US)**

(74) Vertreter: **Downar, Michael**
**Hella Corporate Center GmbH**
**HCC/CPL**
**Rixbecker Strasse 75**
**59552 Lippstadt (DE)**

(54) **Verfahren zur Bestimmung einer Systemtemperatur einer elektrochemischen Batterie**

(57)    Die vorliegende Erfindung betrifft ein Verfahren zur Bestimmung einer Systemtemperatur einer elektrochemischen Batterie, wobei das Verfahren die Schritte umfasst: Messen einer Temperatur TIC(t) in einer Batteriesensoreinrichtung, die an der elektrochemischen Batterie angeschlossen ist; Messen einer Batteriespannung UBat(t) und eines Batteriestroms IBat(t) der elektrochemischen Batterie; Berechnen einer Verlustleistung PVBat(t) der elektrochemischen Batterie aus der Batteriespannung UBat(t) und dem Batteriestrom IBat(t); Bestimmen einer Verlustleistung PVSh(t) des Shunts; Bestimmen der Systemtemperatur der elektrochemischen Batterie mittels eines Temperaturmodells mit einer Mehrzahl von ModellParametern, wobei zumindest die Temperatur TIC(t) und die Verlustleistungen PVBat(t) und PVSh(t) Eingangsgrößen des Temperaturmodells sind.

EP 1 816 700 A1

**Beschreibung**

Die vorliegende Erfindung betrifft ein Verfahren zur Bestimmung einer Systemtemperatur einer elektrochemischen Batterie.

Im Zusammenhang mit dem Energiemanagement des elektrischen Bordnetzes eines Kraftfahrzeugs muss für eine möglichst genaue Bestimmung des Zustands der elektrochemischen Batterie (Ladezustand, Alterung, Startfähigkeit usw.) auch ihre Säuretemperatur TBat(t) bekannt sein. Denn insbesondere die Säuretemperatur TBat(t) beeinflusst das Verhalten der elektrochemischen Batterie maßgeblich. Eine unmittelbare Erfassung (Messung) der Säuretemperatur TBat(t)der elektrochemischen Batterie ist allerdings aus konstruktiven Gründen bei Anwendungen im Automobilbereich nicht kostengünstig realisierbar und somit ohne praktische Bedeutung.

Batteriesensoreinrichtungen, die sich zur Erfassung wichtiger Kenngrößen einer elektrochemischen Batterie eignen, sind aus dem Stand der Technik bereits bekannt. Mit Hilfe der bekannten Batteriesensoreinrichtungen, die an der Batterie angeordnet sind, können zum Beispiel die Batteriegrößen Spannung, Strom und Temperatur erfasst werden. Aus Kostengründen verfügen die aus dem Stand der Technik bekannten Batteriesensoreinrichtungen allerdings nur über interne Temperaturerfassungsmittel. Auf Grund einer Eigenerwärmung im Shunt-Bereich weicht die intern von einem Temperaturerfassungsmittel gemessene Temperatur allerdings zum Teil erheblich (zum Teile um mehr als 30 K) von der tatsächlich herrschenden Säuretemperatur TBat(t) der elektrochemischen Batterie ab.

Eine Messung der Außentemperatur der elektrochemischen Batterie, beispielsweise über eine Bodenplatte oder an einer Seitenwand der elektrochemischen Batterie, ist ebenfalls mit einem zusätzlichen konstruktiven Aufwand verbunden, da diese externen Temperaturerfassungsmittel mit der Batteriesensoreinrichtung verbunden werden müssen. Ferner ist eine derartige Lösung im Falle der Wartung beziehungsweise des Austauschs der Batterie ungünstig, da die Temperaturerfassungsmittel dabei leicht beschädigt werden können.

Der vorliegenden Erfindung liegt die Aufgabe zugrunde, ein Verfahren zur Bestimmung einer Systemtemperatur einer elektrochemischen Batterie zur Verfügung zu stellen, das eine relativ genaue Abschätzung der Systemtemperatur auf einfache und kostengünstige Art und Weise ermöglicht.

VORTEILE DER ERFINDUNG

Die der vorliegenden Erfindung zugrunde liegende Aufgabe wird durch ein Verfahren zur Bestimmung einer Systemtemperatur einer elektrochemischen Batterie mit den Merkmalen des Anspruchs 1 gelöst. Die Unteransprüche betreffen vorteilhafte Weiterbildungen der Erfindung.

Das erfindungsgemäße Verfahren zur Bestimmung einer Systemtemperatur einer elektrochemischen Batterie umfasst folgende Verfahrensschritte:

- Messen einer Temperatur TIC(t) in einer Batteriesensoreinrichtung, die an der elektrochemischen Batterie angeschlossen ist;

- Berechnen einer Verlustleistung PVBat(t) der elektrochemischen Batterie aus der Batteriespannung UBat(t) und dem Batteriestrom IBat(t);

- Bestimmen einer Verlustleistung PVSh(t) des Shunts;

- Bestimmen der Systemtemperatur der elektrochemischen Batterie mittels eines Temperaturmodells mit einer Mehrzahl von Modell-Parametern, wobei zumindest die Temperatur TIC(t)und die Verlustleistungen PVBat(t) und PVSh(t) Eingangsgrößen des Temperaturmodells sind.

Mit Hilfe des erfindungsgemäßen Verfahrens kann eine Systemtemperatur der elektrochemischen Batterie auf einfache und damit kostengünstige Art und Weise mit einer relativ hohen und für praktische Anwendungen ausreichenden Genauigkeit abgeschätzt und dadurch zumindest näherungsweise bestimmt werden. Dem erfindungsgemäßen Verfahren liegt die Erkenntnis zugrunde, dass die Verlustleistung PVBat(t) der elektrochemischen Batterie und die Verlustleistung PVSh(t) des Shunts die wesentlichen Quellen für eine Erwärmung des thermischen Systems sind, welches die elektrochemische Batterie und die Batteriesensoreinrichtung umfasst. Die Einflüsse der Verlustleistung PVBat(t) der elektrochemischen Batterie und der Verlustleistung PVSh(t) des Shunts werden in dem Temperaturmodell, das für die Abschätzung der Systemtemperatur eingesetzt wird, berücksichtigt. Im Temperaturmodell werden die Verlustleistung PVBat(t) der elektrochemischen Batterie und die Verlustleistung PVSh(t) des Shunts als weitere Eingangsgrößen zusammen mit der Temperatur TIC(t), die zum Beispiel mit Hilfe eines Temperaturerfassungsmittels in der Batteriesensoreinrichtung bestimmt werden kann, unmittelbar berücksichtigt. Es hat sich gezeigt, dass die Systemtemperatur der Batterie durch Messungen der Temperatur TIC(t), der Batteriespannung UBat(t) und des Batteriestroms IBat(t) mit Hilfe des Temperaturmodells mit einer für praktische Anwendungen ausreichenden Genauigkeit von etwa 5 K bestimmt werden kann.

In einer vorteilhaften Ausführungsform ist vorgesehen, dass die Verlustleistung PVSh(t) des Shunts aus dem Batteriestrom IBat(t) und einem Shuntwiderstand RSh berechnet wird. Das bedeutet, dass die Bestimmung der Verlustleistung PVSh(t) des Shunts relativ einfach erfolgen kann.

In einer besonders bevorzugten Ausführungsform wird das thermische Verhalten der elektrochemischen Batterie und der Batteriesensoreinrichtung im Temperaturmodell mit Hilfe thermischer Kapazitäten und thermischer Widerstände nachgebildet. Dadurch können eine Mehrzahl von Einflussgrößen auf das thermische System bei der Modellbildung als Modell-Parameter berücksichtigt werden.

Es besteht in einer vorteilhaften Ausführungsform die Möglichkeit, dass die thermischen Kapazitäten des Temperaturmodells eine thermische Kapazität CmBat der elektrochemischen Batterie und/oder eine thermische Kapazität CmSh des Shunts und/oder eine thermische Kapazität CmIC eines Temperaturerfassungsmittels der Batteriesensoreinrichtung umfassen.

Die thermischen Widerstände können einen thermischen Widerstand RBatUmg zwischen der elektrochemischen Batterie und der Umgebung und/oder einen thermischen Widerstand RShUmg zwischen dem Shunt und der Umgebung und/oder einen thermischen Widerstand RICUmg zwischen einem Temperaturerfassungsmittel der Batteriesensoreinrichtung und der Umgebung und/oder einen thermischen Widerstand RShBat zwischen dem Shunt und der elektrochemischen Batterie und/oder einen thermischen Widerstand RShIC zwischen dem Shunt und dem Temperaturerfassungsmittel umfassen.

Um die Genauigkeit der Temperaturbestimmung zu erhöhen, wird in einer besonders vorteilhaften Ausführungsform vorgeschlagen, dass die Systemtemperatur unter Berücksichtigung der Shunttemperatur TSh(t) bestimmt wird.

Um die Genauigkeit der Temperaturbestimmung weiter zu erhöhen, sieht eine besonders bevorzugte Ausführungsform vor, dass eine Umgebungstemperatur TUmg(t) bestimmt wird und dass die Systemtemperatur unter Berücksichtigung der Umgebungstemperatur TUmg(t) bestimmt wird. Die Umgebungstemperatur TUmg(t) kann beispielsweise mit Hilfe geeigneter Temperaturerfassungsmittel gemessen werden. Es besteht jedoch auch die Möglichkeit, die Umgebungstemperatur TUmg(t) durch eine Messung der Temperatur TIC(t) in der Batteriesensoreinrichtung zu jedem Zeitpunkt mit geringer Eigenerwärmung der elektrochemischen Batterie und/oder des Shunts abzuschätzen.

Die Systemtemperatur, die mit Hilfe des hier vorgestellten Verfahrens abgeschätzt wird, kann beispielsweise eine Säuretemperatur der elektrochemischen Batterie sein.

Die Systemtemperatur kann auch eine Poltemperatur der elektrochemischen Batterie sein.

Es besteht die Möglichkeit, dass die Systemtemperatur eine Kabeltemperatur eines an der elektrochemischen Batterie angeschlossenen Kabels ist.

ZEICHNUNGEN

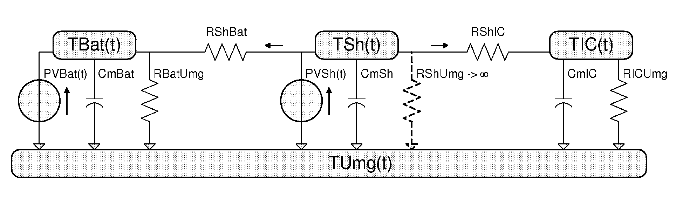

Weitere Merkmale und Vorteile der vorliegenden Erfindung werden deutlich anhand der nachfolgenden Beschreibung eines Ausführungsbeispiels unter Bezugnahme auf die beiliegende Abbildung, in der der Zusammenhang zwischen den Modell-Temperaturen, den Modell-Quellen und den Modell-Parametern eines Temperaturmodells, welches bei einem Verfahren zur Bestimmung einer Systemtemperatur einer elektrochemischen Batterie eingesetzt wird, schematisch dargestellt ist.

BESCHREIBUNG DES AUSFÜHRUNGSBEISPIELS

In dem hier gezeigten Ausführungsbeispiel ist die Systemtemperatur der elektrochemischen Batterie, die mit Hilfe des erfindungsgemäßen Verfahrens abgeschätzt und somit zumindest näherungsweise bestimmt werden kann, die Säuretemperatur TBat(t) der elektrochemischen Batterie. Da die Säuretemperatur TBat(t) in der praktischen Anwendung nicht unmittelbar mit einer herkömmlichen Batteriesensoreinrichtung gemessen werden kann, wird sie mit Hilfe eines Temperaturmodells mit einer Mehrzahl von Modell-Parametern abgeschätzt.

In diesem Ausführungsbeispiel erfolgt die Bestimmung der Säuretemperatur TBat(t) einer elektrochemischen Batterie mit Hilfe eines Temperaturmodells mit folgenden Größen (Modell-Temperaturen, Modell-Quellen und Modell-Parameter):

a) Modell-Temperaturen

TBat(t): Säuretemperatur der elektrochemischen Batterie;
TSh(t): Temperatur des Shunts;
TIC(t): Temperatur in einer

Batteriesensoreinrichtung, die mit Hilfe eines
Temperaturerfassungsmittels gemessen wird;
TUmg(t): Temperatur der Umgebung;

b) Modell-Quellen

PVBat(t): Verlustleistung der Batterie;
PVSh(t): Verlustleistung des Shunts;

c) Modell-Parameter

CmBat: thermische Kapazität der Batterie;
CmSh: thermische Kapazität des Shunts;
CmIC: thermische Kapazität des Temperaturerfassungsmittels;
RBatUmg: thermischer Widerstand zwischen der Batterie und der Umgebung;
RShUmg: thermischer Widerstand zwischen dem Shunt und der Umgebung;
RICUmg: thermischer Widerstand zwischen dem Temperaturerfassungsmittel und der Umgebung;
RShBat: thermischer Widerstand zwischen dem Shunt und der Batterie;
RShIC: thermischer Widerstand zwischen dem Shunt und dem Temperaturerfassungsmittel.

Der Zusammenhang zwischen den Modell-Quellen, den Modell-Temperaturen und den Modell-Parametern des dem hier vorgestellten Verfahren zugrunde liegenden Temperaturmodells ist in der Abbildung schematisch gezeigt. Man erkennt, dass der thermische Widerstand RShUmg zwischen dem Shunt und der Umgebung gegen unendlich konvergiert.

Bei der Durchführung des Verfahrens wird mit Hilfe eines Temperaturerfassungsmittels in einer Batteriesensoreinrichtung, welche an der elektrochemischen Batterie angeordnet ist, die Temperatur TIC(t) gemessen. Darüber hinaus werden mit Hilfe der Batteriesensoreinrichtung als weitere Messgrößen der Batteriestrom IBat(t) sowie die Batteriespannung UBat(t) der elektrochemischen Batterie gemessen. Um zeitabhängige Informationen über den Zustand der Batterie zu erhalten, werden die vorstehend genannten Messgrößen zeitabhängig gemessen. Beispielsweise können die Messungen einmal pro Sekunde erfolgen.

Der Messwert der Temperatur TIC(t), die von dem Temperaturerfassungsmittel in der Batteriesensoreinrichtung gemessen wird, sowie die Messwerte IBat(t) und UBat(t) sind somit die eigentlichen Messgrößen, aus denen bei der Durchführung des Verfahrens die Säuretemperatur TBat(t) der elektrochemischen Batterie abgeschätzt werden kann.

Aus den Messgrößen IBat(t) und UBat(t) werden die Verlustleistung PVBat(t) der elektrochemischen Batterie und die Verlustleistung PVSh(t) des Shunts bestimmt. Die Verlustleistung PVSh(t) des Shunts wird dabei vorzugsweise aus dem von der Batteriesensoreinrichtung gemessenen Batteriestrom IBat(t) und einem Shuntwiderstand RSh berechnet. Es hat sich gezeigt, dass die Verlustleistungen PVBat(t) und PVSh(t) die wesentlichen Einflussgrößen sind, die eine Eigenerwärmung des thermischen Systems, das aus der elektrochemischen Batterie und der Batteriesensoreinrichtung besteht, hervorrufen, so dass diese Verlustleistungen bei der Bestimmung der Säuretemperatur TBat(t) geeignet berücksichtigt werden müssen.

Die Umgebungstemperatur TUmg(t), die in diesem Ausführungsbeispiel ebenfalls eine zentrale Modell-Temperatur des Temperaturmodells ist, kann grundsätzlich mit Hilfe geeigneter Temperaturerfassungsmittel bestimmt werden. Es besteht auch die Möglichkeit, die Umgebungstemperatur TUmg(t) durch eine Messung der Temperatur TIC(t) zu jedem Zeitpunkt mit geringer Eigenerwärmung der elektrochemischen Batterie und/oder des Shunts abzuschätzen.

Mit Hilfe der Modell-Parameter CmBat, CmSh, CmIC, RBatUmg, RShBat, RICUmg, RShIC sowie RShUmg kann in dem Temperaturmodell das thermische Verhalten des thermischen Systems, welches die elektrochemische Batterie und Batteriesensoreinrichtung umfasst, geeignet nachgebildet werden. Die vorstehend genannten Modell-Parameter des Temperaturmodells werden experimentell bestimmt. Dazu wird das thermische System in geeigneter Weise angeregt und dessen thermische Reaktion auf diese Anregung bestimmt. Die Modell-Parameter können dann zum Beispiel mit Hilfe eines iterativen Berechnungsverfahrens bestimmt und gespeichert werden.

Mit dem in der beiliegenden Abbildung schematisch gezeigten Temperaturmodell können die Temperatur des Shunts TSh(t) sowie die Säuretemperatur TBat(t) der elektrochemischen Batterie abgeschätzt und damit zumindest näherungsweise bestimmt werden.

Die Säuretemperatur TBat(t) der elektrochemischen Batterie kann mit Hilfe der nachfolgenden Gleichung berechnet werden:

$$TBat(t) = \frac{1}{CmBat} \int \left( PVBat(t) + \frac{1}{RShBat}\left(TSh(t) - TBat(t)\right) - \frac{1}{RBatUmg}\left(TBat(t) - TUmg(t)\right) \right) dt$$

Die Shunt-Temperatur TSh(t) kann mit Hilfe der nachfolgenden Gleichung berechnet werden:

$$TSh(t) = \frac{1}{CmSh} \int \left( PVSh(t) - \frac{1}{RShBat}\left(TSh(t) - TBat(t)\right) - \frac{1}{RShIC}\left(TSh(t) - TIC(t)\right) \right) dt$$

Zusammenfassend dient somit der Messwert TIC(t) eines vorzugsweise in die Batteriesensoreinrichtung integrierten Temperaturerfassungsmittels zur Anregung des Temperaturmodells, welches eine Abschätzung weiterer Systemtemperaturen ohne deren unmittelbare Messung erlaubt. In Abhängigkeit von der Komplexität des Temperaturmodells sind diese Systemtemperaturen die Säuretemperatur der Batterie TBat(t) sowie die Shunt-Temperatur TSh(t) der Batteriesensoreinrichtung. Es hat sich gezeigt, dass mittels des hier gezeigten Verfahrens die Säuretemperatur TBat(t) der elektrochemischen Batterie mit einer Genauigkeit von etwa 5 K auf einfache und somit kostengünstige Art und Weise bestimmt werden kann.

Es besteht grundsätzlich die Möglichkeit, das hier vorgestellte Temperaturmodell zu erweitern und/oder zu verändern, so dass beispielsweise auch die Poltemperatur der elektrochemischen Batterie und/oder die Kabeltemperatur mit Hilfe des Temperaturmodells abgeschätzt werden können.

**Patentansprüche**

1. Verfahren zur Bestimmung einer Systemtemperatur einer elektrochemischen Batterie, **gekennzeichnet durch** die Verfahrensschritte:

   - Messen einer Temperatur TIC(t) in einer Batteriesensoreinrichtung, die an der elektrochemischen Batterie angeschlossen ist;
   - Messen einer Batteriespannung UBat(t) und eines Batteriestroms IBat(t) der elektrochemischen Batterie;
   - Berechnen einer Verlustleistung PVBat(t) der elektrochemischen Batterie aus der Batteriespannung UBat(t) und dem Batteriestrom IBat(t);
   - Bestimmen einer Verlustleistung PVSh(t) des Shunts;
   - Bestimmen der Systemtemperatur der elektrochemischen Batterie mittels eines Temperaturmodells mit einer Mehrzahl von Modell-Parametern, wobei zumindest die Temperatur TIC(t)und die Verlustleistungen PVBat(t) und PVSh(t) Eingangsgrößen des Temperaturmodells sind.

2. Verfahren nach Anspruch 1, **dadurch gekennzeichnet, dass** die Verlustleistung PVSh(t) des Shunts aus dem Batteriestrom IBat(t) und einem Shuntwiderstand RSh berechnet wird.

3. Verfahren nach Anspruch 1 oder 2, **dadurch gekennzeichnet, dass** das thermische Verhalten der elektrochemischen Batterie und der Batteriesensoreinrichtung im Temperaturmodell mit Hilfe thermischer Kapazitäten und/oder thermischer Widerstände nachgebildet wird.

4. Verfahren nach Anspruch 3, **dadurch gekennzeichnet, dass** die thermischen Kapazitäten des Temperaturmodells eine thermische Kapazität CmBat der elektrochemischen Batterie und/oder eine thermische Kapazität CmSh des Shunts und/oder eine thermische Kapazität CmIC eines Temperaturerfassungsmittels der Batteriesensoreinrichtung umfassen.

5. Verfahren nach einem der Ansprüche 3 oder 4, **dadurch gekennzeichnet, dass** die thermischen Widerstände des Temperaturmodells einen thermischen Widerstand RBatUmg zwischen der elektrochemischen Batterie und der Umgebung und/oder einen thermischen Widerstand RShUmg zwischen dem Shunt und der Umgebung und/oder einen thermischen Widerstand RICUmg zwischen einem Temperaturerfassungsmittel der Batteriesensoreinrichtung und der Umgebung und/oder einen thermischen Widerstand RShBat zwischen dem Shunt und der elektrochemischen Batterie und/oder einen thermischen Widerstand RShIC zwischen dem Shunt und dem Temperaturerfassungsmittel umfassen.

6. Verfahren nach einem der Ansprüche 1 bis 5, **dadurch gekennzeichnet, dass** die Systemtemperatur unter Berücksichtigung der Shunttemperatur TSh(t) bestimmt wird.

7. Verfahren nach einem der Ansprüche 1 bis 6, **dadurch gekennzeichnet, dass** eine Umgebungstemperatur TUmg (t) bestimmt wird und dass die Systemtemperatur unter Berücksichtigung der Umgebungstemperatur TUmg(t) bestimmt wird.

8. Verfahren nach einem der Ansprüche 1 bis 7, **dadurch gekennzeichnet, dass** die Systemtemperatur eine Säuretemperatur TBat(t) der elektrochemischen Batterie ist.

9. Verfahren nach einem der Ansprüche 1 bis 8, **dadurch gekennzeichnet, dass** die Systemtemperatur eine Poltemperatur der elektrochemischen Batterie ist.

10. Verfahren nach einem der Ansprüche 1 bis 9, **dadurch gekennzeichnet, dass** die Systemtemperatur eine Kabeltemperatur eines an der elektrochemischen Batterie angeschlossenen Kabels ist.

RShBat · TBat(t) · PVBat(t) · CmBat · RBatUmg · TSh(t) · PVSh(t) · CmSh · RShIC · RShUmg -> ∞ · TIC(t) · CmIC · RICUmg · TUmg(t)

**Europäisches Patentamt**

# EUROPÄISCHER RECHERCHENBERICHT

Nummer der Anmeldung

EP 07 10 0970

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/155661 A1 (FIELD ROBERT B [CA] ET AL) 12. August 2004 (2004-08-12) * Ansprüche 1,6-8,12,14; Abbildungen 1,4,6 * | 1-10 | INV. H01M10/44 H01M10/48 |
| | ----- | | |
| X | ENERGY CONVERSION AND MANAGEMENT, Bd. 45, 2004, Seite 1015-1041, XP002435781 * Seite 1024, Zeile 7 - Seite 1026; Abbildung 11 * | 1-10 | |
| | ----- | | |
| X | CETC-CANMET ENERGY TECHNOLOGY CENTRE, Nr. 2002-049, 9. April 2002 (2002-04-09), XP002435782 * Zusammenfassung * * Absatz [03.6] * | 1-10 | |
| | ----- | | |
| Y | J. ELECTROCHEM.SOCIETY, Bd. 147, Nr. 8, 2000, Seiten 2910-2922, XP002435783 * Seite 2910, Spalte 1, Zeile 1 - Spalte 3, Zeile 13; Abbildungen 1,3,10 * * Seite 2917, Spalte 1, Zeilen 1-22 * | 1-10 | RECHERCHIERTE SACHGEBIETE (IPC) H01M H02J |
| | ----- | | |
| Y | "HERSTELLERÜBERGREIFENDE ENERGIEMANAGEMENT-LÖSUNG: INTELLIGENTER BATTERIESENSOR" AUTOMOTIVE ELECTRONICS + SYSTEMS, 2004, Seiten 26-29, XP002435784 CARL HANSER VERLAG MÜNCHEN * das ganze Dokument * | 1-10 | |
| | ----- | | |
| T | ANONYMOUS: "Battery Modeling" INTERNET ARTICLE, [Online] XP002435785 Gefunden im Internet: URL:www.thermoanalytics.com/support/public ations/batterymodelsdoc.html> [gefunden am 2007-05-29] | 1-10 | |
| | ----- | | |

Der vorliegende Recherchenbericht wurde für alle Patentansprüche erstellt

| Recherchenort | Abschlußdatum der Recherche | Prüfer |
|---|---|---|
| München | 31. Mai 2007 | Mizera, Erich |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 07 10 0970

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2007

| Im Recherchenbericht angeführtes Patentdokument | Datum der Veröffentlichung | Mitglied(er) der Patentfamilie | Datum der Veröffentlichung |
|---|---|---|---|
| US 2004155661 A1 | 12-08-2004 | CA 2512871 A1 <br> WO 2004073088 A2 | 26-08-2004 <br> 26-08-2004 |

Für nähere Einzelheiten zu diesem Anhang : siehe Amtsblatt des Europäischen Patentamts, Nr.12/82

EPO FORM P0461